# EUROPÄISCHE PATENTSCHRIFT

(11) **EP 1 495 684 B1**
(45) Veröffentlichungstag und Bekanntmachung des Hinweises auf die Patenterteilung: **12.09.2007**
(21) Anmeldenummer: 04013947.9
(22) Anmeldetag: 04.06.2004
(51) Int. Cl.: A24C 5/32, A24D 3/02

(54) **Ausschleusung von Filterstäben aus einer Förderleitung**
Outward transfer of filter rods from a conveyor duct
Eclusage de tiges de filtre au dehors d'une conduite de transport

(30) Priorität: 09.07.2003 EP 03015709
(43) Veröffentlichungstag der Anmeldung: 12.01.2005
(73) Patentinhaber: HAUNI Maschinenbau AG, 21033 Hamburg (DE)
(72) Erfinder: Haul, Michael, 21529 Kröppelshagen (DE)
(74) Vertreter: Seemann, Ralph

(56) Entgegenhaltungen:
- DE-A- 4 338 369
- DE-A- 4 431 273
- DE-A- 10 002 753
- DE-A- 19 740 070
- FR-A- 1 466 337

## Beschreibung

Die Erfindung betrifft ein Verfahren zum längsaxialen Überführen stabförmiger Artikel der Tabak verarbeitenden Industrie, insbesondere Filterstäbe, von einer Sendestation zu einer Empfangsstation über eine Verbindungsleitung, wobei die Artikel in der Verbindungsleitung vereinzelt werden sowie eine Fördereinrichtung zum längsaxialen Überführen stabförmiger Artikel der Tabak verarbeitenden Industrie, insbesondere Filterstäbe, von einer Sendestation zu einer Empfangsstation über eine Verbindungsleitung mit wenigstens einem Vereinzelungsmittel für die Artikel.

Unter "stabförmigen Artikeln der Tabak verarbeitenden Industrie" werden im erfindungsgemäßen Sinn in erster Linie Filterstäbe verstanden, die zwecks Ergänzung von Vorräten in Magazinen von Verarbeitungsmaschinen mittels Druckluft über relativ große Entfernungen überbrückende Transportleitungen zwischen einer bspw. einer Filterherstellungsmaschine zugeordneten Sendeeinrichtung und einer bspw. einer Filteransetzmaschine zugeordneten Empfangseinrichtung überführt werden.

Pneumatische Fördereinrichtungen, in denen stabförmige Artikel axial hintereinander durch eine Leitung von einer Verteilereinheit zu einer Aufnahmeeinheit mittels Druckluft gefördert werden, sind in der Tabakindustrie bekannt. Einrichtungen dieser Art bilden somit ein sich über relativ große Entfernungen erstreckendes Rohrleitungssystem mit geraden und gekrümmten Leitungsabschnitten, durch welche im Normalbetrieb Filterstäbe unterschiedlicher Länge mit etwa gleich bleibendem gegenseitigen Abstand mittels Druckluft transportiert werden. Um einen störungsfreien Betrieb zu gewährleisten, ist die Aufrechterhaltung des Leitungsdruckes in Abhängigkeit der genannten Parameter unerlässlich.

Eine Vorrichtung zur Förderung von Filterstäben zu einem Filtermagazin bzw. ein entsprechendes Verfahren zur Förderung von Filterstäben zu einem Filtermagazin ist durch das sogenannte Filterstab-Beschickungssystem FILTROMAT 3 FE der Patentanmelderin bekannt. Ein derartiges Filterstab-Beschickungssystem, bzw. ein derartiger Filterstabempfänger empfängt längsaxial geförderte Filterstäbe, die zunächst abgebremst werden, um dann längsaxial beschleunigt zu werden und anschließend dem Filtermagazin queraxial zugeführt zu werden. Hierbei sind verschiedene Modulvarianten bekannt. Es existieren bspw. Einzelempfänger, Doppelempfänger und Dreifachempfänger. In Abhängigkeit des Bedarfes der Filterstäbe wird die Geschwindigkeit des Filterstabempfängers geregelt.

In DE-A-197 40 070 ist eine Fördereinrichtung zum Transportieren von Filterstäben zwischen einer Sendestation und einer Empfangsstation über eine pneumatische Förderleitung beschrieben.

Gemäß DE-A-100 02 753 verfügt eine Verbindungsleitung einer pneumatischen Fördereinrichtung über einen auslenkbaren Leitungsabschnitt, so dass bei einem Artikelstau in der Empfangsstation die Artikel vor dem Eintritt in die Empfangsstation in einer begrenzten Anzahl ausgeschleust werden. Auf diese Weise wird die durch den Artikelstau in der Empfangsstation verursachte Störung ungehindert und schnell durch einen Eingriff in die Empfangsstation von außen beseitigt.

Ferner ist in DE-A-43 38 369 eine Förderleitung für stabförmige Gegenstände offenbart, wobei in einem Abschnitt des Förderkanals ein Torglied vorgesehen ist, das in Abhängigkeit von Signalen öffnet, die einen Stau von Filterstäben in einer mit dem Förderkanal verbundenen Aufnahmeeinheit anzeigen. Bei Öffnung des Torgliedes werden die im Förderkanal verbleibenden Filterstäbe zu einem Ausschussbehälter abgeleitet. Dadurch wird ein Stau von Filterstäben vermieden, der zur Beschädigung der Filterstäbe vor der Aufnahmeeinheit führt.

Überdies ist in DE-A-44 31 273 eine Fördervorrichtung zum Fördern von Filterstäben in einer pneumatischen Fördereinrichtung beschrieben. Vor dem Eingang zu einer Empfangsstation werden die Filterstäbe ausgeworfen, wenn der Abstand zwischen aufeinander folgenden Filterstäben in der Förderleitung zu klein ist. Hierzu sind entsprechende Sensoren vorgesehen.

Ausgehend von diesem Stand der Technik ist es Aufgabe der vorliegenden Erfindung, die Zuführung von Filterstäben zu einer Empfangsstation zu verbessern, wobei es möglich sein soll, den Strom von Filterstäben gezielt zu beeinflussen und nach Möglichkeit vorbestimmte, insbesondere fehlerhafte, Filterstäbe zu erfassen.

Gelöst wird diese Aufgabe bei einem Verfahren zum längsaxialen Überführen stabförmiger Artikel der Tabak verarbeitenden Industrie, insbesondere Filterstäbe, von einer Sendestation zu einer Empfangsstation über eine Verbindungsleitung, wobei die Artikel in der Verbindungsleitung vereinzelt werden, dadurch, dass die Artikel nach der Vereinzelung mittels einer Prüfeinrichtung geprüft werden und anschließend mittels einer Schleuseneinrichtung in Abhängigkeit des Prüfergebnisses aus der Verbindungsleitung ausgeschleust werden. Durch die Vereinzelung ist es möglich, dass die hintereinander geförderten Artikel auseinander gezogen werden, so dass eine ausreichende Lücke zwischen den Artikeln geschaffen wird, um nachfolgend bestimmte Artikel aus der Verbindungsleitung zu entfernen. Hierdurch gelangen nicht alle Filterstäbe zu einer Empfangsstation. Hierdurch kann der Massenstrom an Filterstäben gezielt beeinflusst werden.

Eine Ausschleusung von Artikeln aus der Verbindungsleitung wird insbesondere dann durchgeführt, wenn die Artikel mittels einer Prüfeinrichtung geprüft werden und in Abhängigkeit des Prüfergebnisses ausgeschleust werden. Hierdurch gelangen nur fehlerfreie Filterstäbe zur Empfangsstation. Beschädigte oder zu große bzw. zu kleine Filterstäbe werden aus dem weiteren Herstellungsprozess entfernt. Eine Prüfeinrichtung für Filterstäbe ist aus der europäischen Patentanmeldung mit der Anmelde-Nr. 02020291.7 beschrieben.

Des weiteren ist es von Vorteil, wenn die Artikel nach der Vereinzelung geprüft werden, so dass mit der oben genannten Prüfeinrichtung mehrere physikalische Größen der Filterstäbe gleichzeitig ermittelt werden.

In einer Weiterbildung der Erfindung werden die Artikel durch eine, insbesondere seitliche, Beaufschlagung mit Luft, vorzugsweise Druckluft, ausgeschleust. Während ihrer längsaxialen Förderung werden somit Filterstäbe beispielsweise mit einem Druckluftstoß aus der Verbindungsleitung entfernt. Dies stellt eine einfache Maßnahme dar.

In einer alternativen Ausführungsform der Erfindung werden die Artikel durch einen queraxialen Transport aus der Verbindungsleitung ausgeschleust. Hierzu ist eine Schleuseneinrichtung vorgesehen, die beispielsweise einen beschädigten Filterstab aus der Verbindungsleitung entfernt und gleichzeitig mit der Ausschleusung des fehlerhaften Filterstabes die Verbindungsleitung zwischen dem Vereinzelungsmittel und der Empfangsstation wieder herstellt bzw. bereitstellt.

Ferner wird die Aufgabe gelöst durch eine Fördereinrichtung zum längsaxialen Überführen stabförmiger Artikel der Tabak verarbeitenden Industrie, insbesondere Filterstäbe, von einer Sendestation zu einer Empfangsstation über eine Verbindungsleitung mit wenigstens einem Vereinzelungsmittel für die Artikel, die dadurch weitergebildet wird, dass in Förderrichtung der Artikel an der Verbindungsleitung das Vereinzelungsmittel für die Artikel und wenigstens eine Schleuseneinrichtung vorgesehen sind, wobei eine Prüfeinrichtung für die Artikel zwischen dem Vereinzelungsmittel und der Schleuseneinrichtung vorgesehen ist.

Zweckmäßigerweise ist eine Prüfeinrichtung für die Artikel, insbesondere zwischen dem Vereinzelungsmittel und der Schleuseneinrichtung, vorgesehen.

Bevorzugterweise ist das Vereinzelungsmittel wenigstens mit einem Bremsmittel, insbesondere Bremsrollenpaar, und/oder mit einem Beschleunigungsmittel, insbesondere Beschleunigerrollenpaar, versehen.

Eine einfache Ausführungsform der Erfindung liegt dann vor, wenn die Schleuseneinrichtung wenigstens zwei Rohrabschnitte aufweist, wobei ein Rohrabschnitt koaxial zur Förderleitung in Arbeitsstellung und der wenigstens zweite Rohrabschnitt in Bereitschaftsstellung angeordnet sind.

Darüber hinaus ist es günstig, wenn ein Rohrabschnitt aus der Bereitschaftsstellung in die Arbeitsstellung und gleichzeitig der Rohrabschnitt aus der Arbeitsstellung in Bereitschaftsstellung, insbesondere durch Verdrehen oder Verschieben der Schleuseneinrichtung, bringbar sind.

Vorteilhafterweise ist wenigstens ein Antriebsmittel für die Schleuseneinrichtung vorgesehen, so dass die Schleuseneinrichtung schnell bewegt wird.

In einer alternativen Ausführungsform der Erfindung ist die Schleuseneinrichtung mittels einer, insbesondere seitlichen, Öffnung der Verbindungsleitung und wenigstens einer Blasluftdüse ausgebildet.

Weiterhin ist die Öffnung der Verbindungsleitung mittels einer Verdeckung schließbar.

Bei einer bevorzugten Konstruktion ist vorgesehen, dass die Verdeckung für das Ausschleusen eines Filterstabes in Öffnungsstellung, insbesondere mittels eines Ventils, bringbar ist.

Um nur einzelne Filterstäbe der Schleuseneinrichtung zuzuführen, ist vorteilhafterweise eine Lichtschranke vor der Schleuseneinrichtung vorgesehen.

An der Fördereinrichtung ist vorteilhafterweise ein Auffangbehälter für die ausgeschleusten Artikel vorgesehen ist.

Der mit der Erfindung erzielte Vorteil besteht darin, dass mittels eines eigenständigen Vereinzelungsmittels ein ausreichender Abstand zwischen zwei hintereinander geförderten Filterstäben geschaffen wird, so dass nachfolgend mittels einer Prüf- bzw. Messeinrichtung die Filterstäbe auf bestimmte physikalische Eigenschaften, wie z.B. Durchmesser und/oder Länge, geprüft werden. Anhand dieser Prüfergebnisse werden qualitativ schlechte oder defekte Filterstäbe ausgeschleust, bevor sie in den Empfänger einlaufen.

Die Erfindung wird nachstehend ohne Beschränkung des allgemeinen Erfindungsgedankens anhand von Ausführungsbeispielen unter Bezugnahme auf die beigefügten schematischen Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: eine schematische Ansicht eines Filterstabempfängers mit einer Empfangsstation;
- Fig. 2: eine Prinzipdarstellung einer erfindungsgemäßen Schleuseneinrichtung in zwei Arbeitsstellungen;
- Fig. 3: eine schematische Querschnittsansicht einer weiteren erfindungsgemäßen Schleuseneinrichtung;
- Fig. 4a, 4b: eine weitere erfindungsgemäße Schleuseneinrichtung im Querschnitt in zwei Arbeitspositionen und
- Fig. 5a, 5b: jeweils eine Ansicht einer pneumatischen Fördereinrichtung mit einer gekrümmten Verbindungsleitung.

In den folgenden Figuren sind jeweils gleiche oder gleichartige Elemente bzw. entsprechende Teile mit denselben Bezugsziffern bezeichnet, so dass von einer entsprechenden erneuten Vorstellung abgesehen wird und lediglich Abweichungen der in diesen Figuren dargestellten Ausführungsbeispiele gegenüber dem ersten Ausführungsbeispiel erläutert werden.

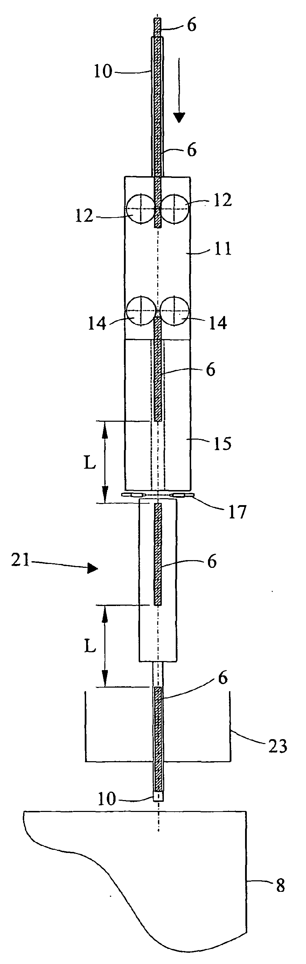

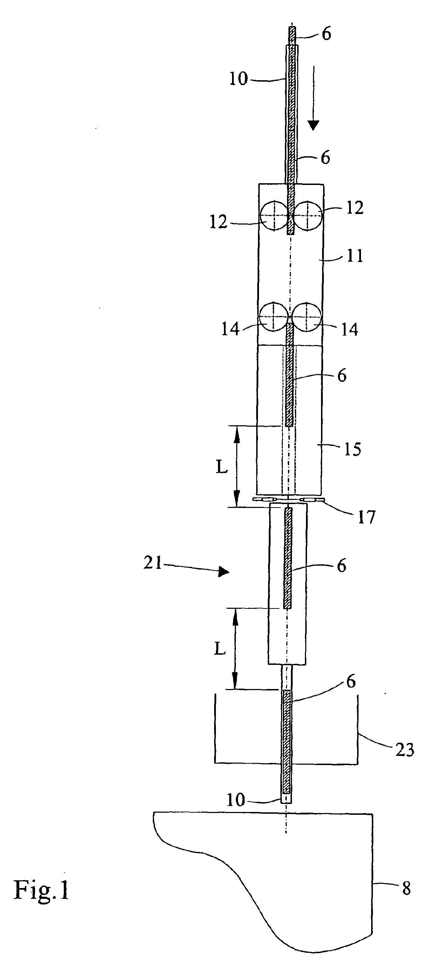

Fig. 1 zeigt einen Filterstabempfänger zur Förderung von Filterstäben 6 in ein Filtermagazin 8. Das Filtermagazin 8 hat die Funktion eines Empfängers für die Filterstäbe 6. Die in das Filtermagazin 8 eingeführten Filterstäbe 6 dienen dazu, nachdem diese bspw. in Filterstäbe zweifacher Gebrauchslänge geschnitten werden, mit Tabakstockpaaren zusammengeführt zu werden, um Filterzigaretten herzustellen.

Alternativ können die in das Filtermagazin 8 zugeführten Filterstäbe 6 auch dazu dienen, in entsprechende Filtersegmente zerschnitten, und mit einer Anordnung von Filtersegmenten zur Herstellung von Multisegmentfiltern zugeführt zu werden.

Die Filterstäbe 6 mit einer n-fachen Gebrauchslänge werden über eine Zuführleitung 10 von einer Filterherstellungsmaschine mittels eines Filterstabsenders dem Filtermagazin 8 zugeführt. Hierbei werden die Filterstäbe 6 zunächst einer Beschleunigereinheit 11 zugeführt, bei der zunächst die ankommenden Filterstäbe 6 mittels Bremsrollen 12 abgebremst werden und anschließend mittels Beschleunigerrollen 14 beschleunigt werden.

Im Anschluss an die Beschleunigereinheit 11 werden die Filterstäbe 6 mittels der Beschleunigerrollen 14 beschleunigt zu einer Messeinrichtung 15 transportiert. Durch die Messvorrichtung 15 wird beispielsweise festgestellt, ob ein Filterstab vorgegebenen Gütekriterien genügt. Diese Gütekriterien können bspw. die Länge und/oder der Durchmesser des jeweiligen Filterstabs sein.

Durch die Beschleunigung der Filterstäbe 6 in der Beschleunigereinheit 11 werden die Filterstäbe 6 vereinzelt. Dadurch wird zwischen den Filterstäben ein ausreichender Abstand L geschaffen, so dass die Filterstäbe 6 mittels der Messeinrichtung 15 einzeln untersucht werden. Eine Messvorrichtung dieser Art ist beispielsweise in der europäischen Patentanmeldung mit der Anmelde-Nr. 02020291.7 beschrieben. In einer alternativen Ausführung verfügt die Beschleunigereinheit 11 nur über ein Rollenpaar, durch das die Filterstäbe 6 beschleunigt werden.

Nach Durchlaufen der Messeinrichtung 15 ist am Ausgang der Messeinrichtung 15 eine Lichtschranke 17 im Übergang zu einer Schleuse 21 angeordnet. Mittels der Lichtschranke 17 wird festgestellt, ob der in der Messeinrichtung 15 geprüfte Filterstab vollständig in die Schleuse 21 eingetaucht ist.

Durch die Messeinrichtung 15 wird festgestellt, dass der in der Schleuse 21 sich befindende Filterstab 6 fehlerhaft ist. Bei einem fehlerhaften Filterstab wird die Schleuse 21 so gesteuert, dass dieser Filterstab 6 nicht in das Filtermagazin 8 einläuft, sondern in eine Ausschusskiste 23. Hierbei ist die Umsteuerung der Schleuse innerhalb des zwischen zwei hintereinander geförderten Filterstäben geschaffenen Abstandes L auszuführen. Insbesondere sind die Betriebsparameter so zu wählen, dass kein zweiter nachfolgender Filterstab in die Schleuse 21 eingeführt wird.

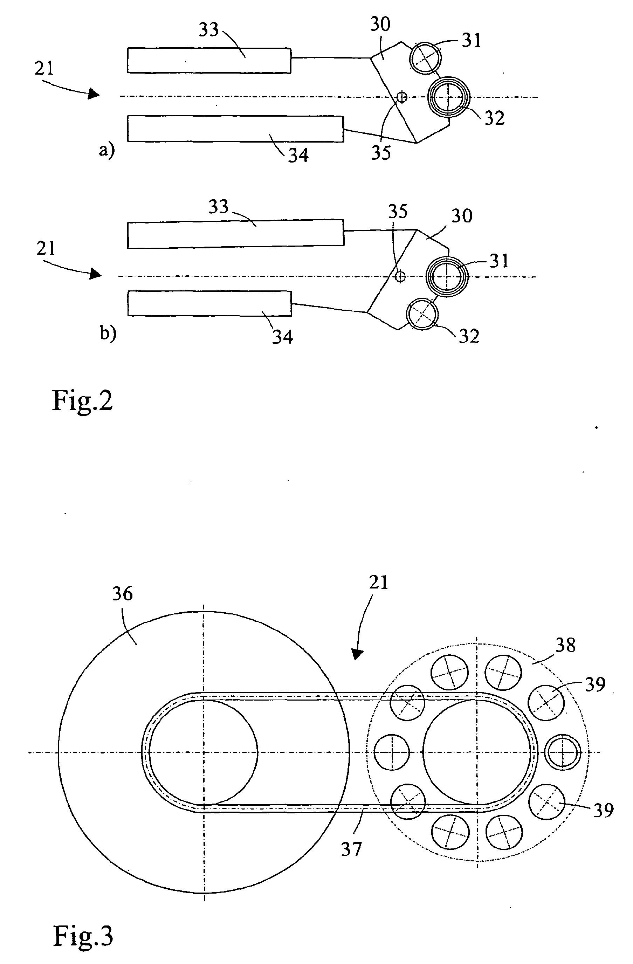

In Fig. 2 ist schematisch eine erste Ausführungsform einer Schleuse 21 mit zwei Stellungen (Fall a, Fall b) im Querschnitt gezeigt. Die Schleuse 21 verfügt über einen um eine Schwenkachse 35 schwenkbaren Tragkörper 30, auf dem zwei parallel angeordnete Rohre 31, 32 angeordnet sind. Der Tragkörper 30 wird schwenkbar mittels zweier Linearmotoren 33, 34 angetrieben, die mit dem Tragkörper 30 verbunden sind.

In der ersten Stellung (Fall a) ist das Rohr 32 koaxial zur Zuführleitung 10 (vgl. Fig. 1) in Arbeitsstellung angeordnet. In dieser Position des Rohres 32 werden die Filterstäbe durch dieses Rohr gefördert. Befindet sich im Rohrabschnitt 32 ein fehlerhafter Filterstab, so werden die Motoren 33, 34 aktiviert, so dass das Rohr 32 zusammen mit dem fehlerhaften Filterstab aus dieser Arbeitsposition herausgeschwenkt und der Filterstab in die Ausschusskiste 23 transportiert wird. Durch die Verschwenkung des Tragkörpers 30 wird der Rohrabschnitt 31 in die Arbeitsposition, d.h. koaxial zur Zuführleitung 10 angeordnet (Fall B). Das Rohr 31 wird so lange in dieser Arbeitsposition gehalten, bis ein fehlerhafter Filterstab durch das Rohr 30 gefördert wird, so dass der Tragkörper 30 zurückgeschwenkt wird (Fall a).

Gemäß einer alternativen, hier nicht dargestellten Ausführung sind die Rohre 31, 32 auf einem linear verfahrbaren Körper angeordnet und werden analog zu dem oben dargestellten Prinzip betrieben. Das bedeutet, dass durch einen Rohrabschnitt so lange Filterstäbe transportiert werden, bis ein fehlerhafter Filterstab am Rohrabschnitt ankommt und durch die Verfahrbewegung herausgeschleust wird. Gleichzeitig wird ein anderer Rohrabschnitt koaxial zur Zuführleitung angeordnet.

Eine weitere Ausführungsform einer Schleuse 21 ist in Fig. 3 schematisch im Querschnitt dargestellt. Bei dieser Ausführungsform der Schleuse 21 sind mehrere Rohre 39 auf einem Trommelkörper 38 kollinear zueinander und sternförmig angeordnet. Der Trommelkörper 38 ist drehbar gelagert und wird über einen Riemen 37 von einem Motor 36 angetrieben. Bei dieser Schleuse 21 wird jeweils nur ein Rohr koaxial zur Zuführleitung 10 angeordnet. Befindet sich ein beschädigter Filterstab innerhalb dieses Rohres 39, so wird der Motor 36 aktiviert und befördert unter Drehung des Trommelkörpers 38 den Filterstab aus der Zuführungsleitung zum Filtermagazin. Durch die Drehung wird gleichzeitig ein leeres Rohr 39 koaxial zur Zuführleitung 10 angeordnet.

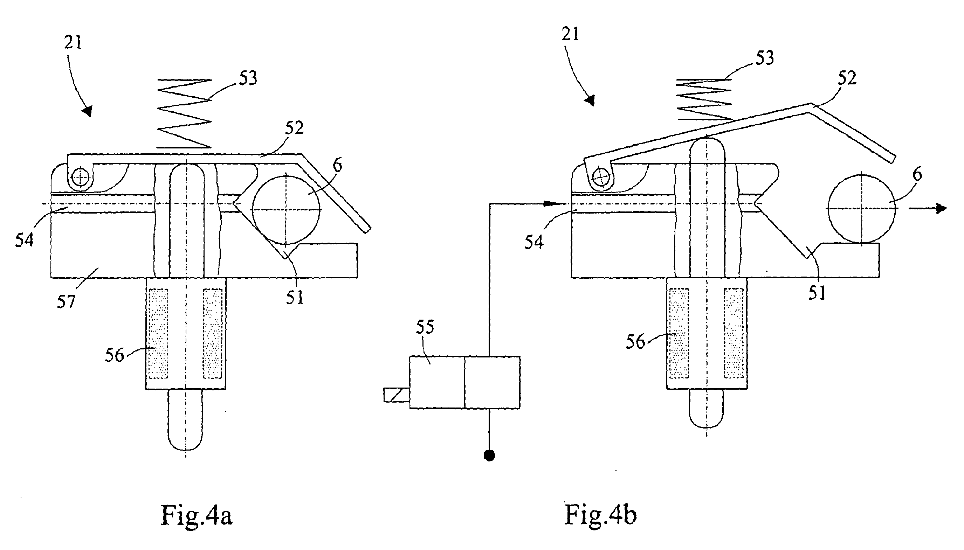

In den Figuren 4a, 4b ist eine Schleuse 21 gemäß einer weiteren Ausführungsform im Querschnitt dargestellt. Die Schleuse 21 verfügt über einen offenen Kanal 51, in dem die Filterstäbe 6 gefördert werden. Der Kanal 51 ist offen gestaltet und wird mittels eines Deckels 52 zum Transport der Filterstäbe geschlossen. Der Deckel 52 ist schwenkbar gelagert und wird mittels einer oberhalb angeordneten Feder 53 nach unten gedrückt. Der Deckel 52 ist schwenkbar an einem Schleusenkörper 57 gelagert. Darüber hinaus verfügt der Schleusenkörper 57 über einen Blasluftkanal 54, über den Blasluft bei Öffnen des Transportkanals 51 durch Verschwenken des Deckels 52 mit Druckluft beaufschlagt wird.

Wird ein fehlerhafter Filterstab 6 in den Kanal 51 längsaxial transportiert, wird der Deckel 52 mittels eines Magnetschiebers 56 aus seiner Ruheposition herausgeschwenkt. Hierbei drückt der Magnetschieber 56 von unten gegen den Deckel 52 und entgegen der Federkraft der Druckfeder 53.

Bei Verschwenken des Deckels 52 wird gleichzeitig ein Schaltventil 55 betätigt, so dass durch den Blasluftkanal 54 der Filterstab 6 mit Druckluft beaufschlagt wird und dieser Filterstab 6 aus dem geöffneten Kanal 51 herausgeblasen wird (Fig. 4b).

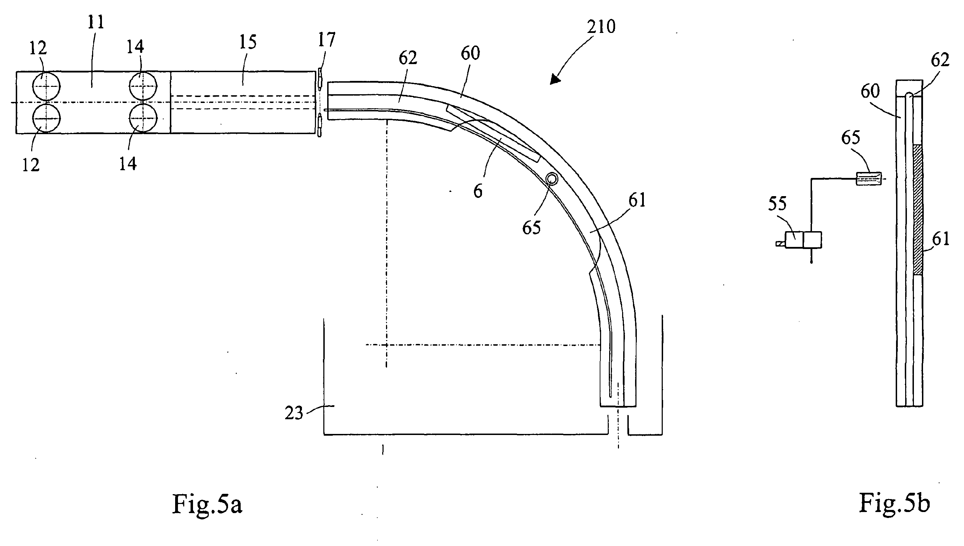

In den Figuren 5a, 5b ist eine weitere Schleuse 210 gemäß einer anderen bevorzugten Ausführungsform in zwei Ansichten schematisch dargestellt. Fig. 5a zeigt eine Seitenansicht der Schleuse 210. In Fig. 5b ist eine Draufsicht von unten gezeigt.

Bei der Schleuse 210 werden ankommende Filterstäbe 6 mittels der Beschleunigereinheit 11 vereinzelt und nachfolgend durch die Messeinrichtung 15 transportiert. Nach Durchtritt durch die Lichtschranke 17 durchlaufen die Filterstäbe 6 ein Bogenstück 60 mit einer Führungsnut 62 und werden nach unten senkrecht umgelenkt. Das Bogenstück 60 verfügt seitlich über eine Ausnehmung 61. Am Bogenstück 60 ist im Bereich der Ausnehmung 61 auf der anderen gegenüberliegenden Seitenwand des nach unten offenen Bogenstücks 60 eine Blasluftdüse 65 angeordnet. Wenn ein fehlerhafter Filterstab festgestellt wird, wird die Blasluftdüse 65 über ein Schaltventil 55 mit Druckluft beaufschlagt, so dass der in das Bogenstück 60 eintretende Filterstab 6 seitlich mit Druckluft beaufschlagt wird und durch die Ausnehmung 61 seitlich wegfliegt und in die Ausschusskiste gelangt. Die seitliche Anordnung der Blasluftdüse 65 in Bezug auf die Ausnehmung 61 ist in Fig. 5 b schematisch gezeigt.

Durch die Erfindung wird erreicht, dass qualitativ schlechte und defekte Filterstäbe aus dem weiteren Herstellungsprozess entfernt werden, bevor sie in einen Empfänger gelangen. Hierdurch werden Störungen durch kaputte Filter im Empfänger vermieden.

### Bezugszeichenliste

- 6: Filterstab
- 8: Filtermagazin
- 10: Zuführleitung
- 11: Beschleunigereinheit
- 12: Bremsrollen
- 14: Beschleunigerrollen
- 15: Messvorrichtung
- 17: Lichtschranke
- 21: Schleuse
- 23: Ausschusskiste
- 30: Tragkörper
- 31: Rohr
- 32: Rohr
- 33: Motor
- 34: Motor
- 35: Schwenkachse
- 36: Motor
- 37: Riemen
- 38: Trommelkörper
- 39: Rohr
- 51: Kanal
- 52: Deckel
- 53: Druckfeder
- 54: Blasluftkanal
- 55: Schaltventil
- 56: Magnetschieber
- 57: Schleusenkörper
- 60: Bogenstück
- 61: Ausnehmung
- 62: Führungsnut
- 65: Blasluftdüse
- 210: Schleuse
- L: Abstand

## Patentansprüche

1. Verfahren zum längsaxialen Überführen stabförmiger Artikel der Tabak verarbeitenden Industrie (6), insbesondere Filterstäbe (6), von einer Sendestation zu einer Empfangsstation (8) über eine Verbindungsleitung (10), wobei die Artikel (6) in der Verbindungsleitung (10) vereinzelt werden, **dadurch gekennzeichnet, dass** die Artikel (6) nach der Vereinzelung mittels einer Prüfeinrichtung (15) geprüft werden und anschließend mittels einer Schleuseneinrichtung (21, 210) in Abhängigkeit des Prüfergebnisses aus der Verbindungsleitung (10) ausgeschleust werden.

2. Verfahren nach Anspruch 1, **dadurch gekennzeichnet, dass** die Artikel (6) durch, insbesondere seitliche, Beaufschlagung mit Luft, vorzugsweise Druckluft, ausgeschleust werden.

3. Verfahren nach Anspruch 1 oder 2, **dadurch gekennzeichnet, dass** die Artikel (6) durch einen queraxialen Transport ausgeschleust werden.

4. Fördereinrichtung zum längsaxialen Überführen stabförmiger Artikel der Tabak verarbeitenden Industrie (6), insbesondere Filterstäbe (6), von einer Sendestation zu einer Empfangsstation (8) über eine Verbindungsleitung (10) mit wenigstens einem Vereinzelungsmittel (11) für die Artikel (6), **dadurch gekennzeichnet, dass** in Förderrichtung der Artikel (6) an der Verbindungsleitung (10) das Vereinzelungsmittel (11) für die Artikel (6) und wenigstens eine Schleuseneinrichtung (21, 210) vorgesehen sind, wobei eine Prüfeinrichtung (15) für die Artikel (6) zwischen dem Vereinzelungsmittel (11) und der Schleuseneinrichtung (21, 210), vorgesehen ist.

5. Fördereinrichtung nach Anspruch 4, **dadurch gekennzeichnet, dass** das Vereinzelungsmittel (11) wenigstens mit einem Bremsmittel (12), insbesondere Bremsrollenpaar (12), und/oder einem Beschleunigungsmittel (14), insbesondere Beschleunigungsrollenpaar (14), ausgebildet ist.

6. Fördereinrichtung nach Anspruch 4 oder 5, **dadurch gekennzeichnet, dass** die Schleuseneinrichtung (21) wenigstens zwei Rohrabschnitte (31, 32; 39) aufweist, wobei ein Rohrabschnitt (31, 32, 39) koaxial zur Verbindungsleitung (10) in Arbeitsstellung und der wenigstens zweite Rohrabschnitt (32, 31, 39) in Bereitschaftsstellung angeordnet sind.

7. Fördereinrichtung nach Anspruch 6, **dadurch gekennzeichnet, dass** ein Rohrabschnitt (31, 32, 39) aus der Bereitschaftsstellung in die Arbeitsstellung und gleichzeitig der Rohrabschnitt in Arbeitsstellung (32, 31, 39) in Bereitschaftsstellung, insbesondere durch Verdrehen der Schleuseneinrichtung (21), bringbar sind.

8. Fördereinrichtung nach Anspruch 6 oder 7, **dadurch gekennzeichnet, dass** wenigstens ein Antriebselement (33, 34) für die Schleuseneinrichtung (21) vorgesehen ist.

9. Fördereinrichtung nach einem der Ansprüche 4 bis 6, **dadurch gekennzeichnet, dass** die Schleuseneinrichtung (21, 210) mittels einer, insbesondere seitlichen, Öffnung (51, 61) der Verbindungsleitung (10) und wenigstens einer Blasluftdüse (54, 65) ausgebildet ist.

10. Fördereinrichtung nach Anspruch 9, **dadurch gekennzeichnet, dass** die Öffnung (59) der Verbindungsleitung (10) mittels einer Verdeckung (52) schließbar ist.

11. Fördereinrichtung nach Anspruch 10, **dadurch gekennzeichnet, dass** die Verdeckung (52) für das Ausschleusen eines Artikels (6) in Öffnungsstellung, insbesondere mittels eines Ventils (56), bringbar ist.

12. Fördereinrichtung nach einem oder mehreren der Ansprüche 4 bis 11, **dadurch gekennzeichnet, dass** eine Lichtschranke (17) vor der Schleuseneinrichtung (21, 210) vorgesehen ist.

## Claims

1. Method of delivering rod-shaped articles of the tobacco-processing industry (6), in particular filter rods (6), in the direction of their longitudinal axis through a connection line (10) from a sending station to a receiving station (8), wherein the articles (6) are decollated in the connection line (10), **characterized in that** the articles (6) after being decollated are inspected by means of an inspection device (15) and are then in dependence upon the inspection result transferred out of the connection line (10) by means of a lock device (21, 210).

2. Method according to claim 1, **characterized in that** the articles (6) are transferred out by being acted upon, in particular laterally, by air, preferably compressed air.

3. Method according to claim 1 or 2, **characterized in that** the articles (6) are transferred out by being conveyed in the direction of their transverse axis.

4. Conveying device for delivering rod-shaped articles of the tobacco-processing industry (6), in particular filter rods (6), in the direction of their longitudinal axis from a sending station to a receiving station (8) through a connection line (10) having at least one decollating means (11) for the articles (6), **characterized in that** in conveying direction of the articles (6) on the connection line (10) the decollating means (11) for the articles (6) and at least one lock device (21, 210) are provided, wherein an inspection device (15) for the articles (6) is provided between the decollating means (11) and the lock device (21, 210).

5. Conveying device according to claim 4, **characterized in that** the decollating means (11) is formed by at least one braking means (12), in particular a braking roller pair (12), and/or an accelerating means (14), in particular an accelerating roller pair (14).

6. Conveying device according to claim 4 or 5, **characterized in that** the lock device (21) comprises at least two pipe portions (31, 32; 39), wherein one pipe portion (31, 32, 39) is disposed coaxially with the connection line (10) in operating position and the at least second pipe portion (32, 31, 39) is disposed in stand-by position.

7. Conveying device according to claim 6, **characterized in that** one pipe portion (31, 32, 39) is movable from the stand-by position into the operating position and at the same time the pipe portion in operating position (32, 31, 39) is movable into stand-by position, in particular through rotation of the lock device (21).

8. Conveying device according to claim 6 or 7, **characterized in that** at least one drive element (33, 34) is provided for the lock device (21).

9. Conveying device according to one of claims 4 to 6, **characterized in that** the lock device (21, 210) is formed by means of an, in particular lateral, opening (51, 61) of the connection line (10) and at least one blast air nozzle (54, 65).

10. Conveying device according to claim 9, **characterized in that** the opening (59) of the connection line (10) is closable by means of a cover (52).

11. Conveying device according to claim 10, **characterized in that** for outward transfer of an article (6) the cover (52) is movable into open position, in particular by means of a valve (56).

12. Conveying device according to one or more of claims 4 to 11, **characterized in that** a light barrier (17) is provided upstream of the lock device (21, 210).

## Revendications

1. Procédé pour le transfert selon l'axe longitudinal d'articles en forme de tige de l'industrie (6) de transformation du tabac, en particulier des tiges de filtres (6), d'une station d'émission à une station de réception (8), par l'intermédiaire d'une conduite de raccordement (10), les articles (6) étant séparés dans la conduite de raccordement (10), **caractérisé en ce qu'**après la séparation, les articles (6) sont contrôlés à l'aide d'un dispositif de contrôle (15) et ensuite, éclusés de la conduite de raccordement (10) à l'aide d'un dispositif d'éclusage (21, 210) en fonction du résultat de contrôle.

2. Procédé selon la revendication 1, **caractérisé en ce que** les articles (6) sont éclusés par une alimentation, en particulier latérale, en air de préférence, en air comprimé.

3. Procédé selon la revendication 1 ou 2, **caractérisé en ce que** les articles (6) sont éclusés par un transport selon l'axe transversal.

4. Dispositif de transport pour le transfert selon l'axe longitudinal d'articles en forme de tige de l'industrie (6) de transformation du tabac, en particulier des tiges de filtres (6), d'une station d'émission à une station de réception (8), par l'intermédiaire d'une conduite de raccordement (10), avec au moins un moyen de séparation (11) pour les articles (6), **caractérisé en ce que**, dans le sens de transport des articles (6) sur la conduite de raccordement (10), il est prévu le moyen de séparation (11) pour les articles (6) et au moins un dispositif d'éclusage (21, 210), un dispositif de contrôle (15) étant prévu pour les articles (6) entre le moyen de séparation (11) et le dispositif d'éclusage (21, 210).

5. Dispositif de transport selon la revendication 4, **caractérisé en ce que** le moyen de séparation (11) est réalisé avec au moins un moyen de freinage (12), en particulier une paire de rouleaux de freinage (12) et/ou un moyen d'accélération (14), en particulier une paire de rouleaux d'accélération (14).

6. Dispositif de transport selon la revendication 4 ou 5, **caractérisé en ce que** le dispositif d'éclusage (21) présente au moins deux sections de tube (31, 32 ; 39), une section de tube (31, 32 ; 39) étant disposée coaxialement à la conduite de raccordement (10) en position de travail et ladite au moins deuxième section de tube (32, 31, 39) étant disposée en position dd'attente.

7. Dispositif de transport selon la revendication 6, **caractérisé en ce qu'**une section de tube (31, 32, 39) peut être amenée de la position d'attente à la position de travail et **en ce que**, simultanément, la section de tube (31, 32, 39) en position de travail peut être amenée en position d'attente, en particulier par rotation du dispositif d'éclusage (21).

8. Dispositif de transport selon la revendication 6 ou 7, **caractérisé en ce qu'**au moins un élément d'entraînement (33, 34) est prévu pour le dispositif d'éclusage (21).

9. Dispositif de transport selon l'une des revendications 4 à 6, **caractérisé en ce que** le dispositif d'éclusage (21, 210) est réalisé à l'aide d'au moins une ouverture (51, 61), en particulier latérale, de la conduite de raccordement (10) et d'au moins une buse d'air de soufflage (54, 65).

10. Dispositif de transport selon la revendication 9, **caractérisé en ce que** l'ouverture (59) de la conduite de raccordement (10) peut être fermée à l'aide d'un cache (52).

11. Dispositif de transport selon la revendication 10, **caractérisé en ce que** le cache (52) pour l'éclusage d'un article (6) peut être amené en position d'ouverture, en particulier à l'aide d'une vanne (56).

12. Dispositif de transport selon l'une ou plusieurs des revendications 4 à 11, **caractérisé en ce qu'**une barrière photoélectrique (17) est prévue en amont du dispositif d'éclusage (21, 210).
